# EUROPEAN PATENT APPLICATION

(11) **EP 2 527 882 A1**
(43) Date of publication of application: **28.11.2012**
(21) Application number: 12169211.5
(22) Date of filing: 24.05.2012
(51) Int. Cl.: G02B 5/04, G02B 27/00, G02B 3/00, G02B 5/02, G02F 1/1335

(54) **Optical filter for reducing color shift and liquid crystal display having the same**

(30) Priority: 27.05.2011 KR 20110050615
(71) Applicant: Samsung Corning Precision Materials Co., Ltd., Gyeongsangbuk-do Gumi-si, 730-735 (KR)
(72) Inventor: Lee, Jinhoon, Asan-si ChungCheongNam-Do 336-841 (KR); Yeom, Ji Yoon, Asan-si ChungCheongNam-Do 336-841 (KR); Park, Seung Won, Asan-si ChungCheongNam-Do 336-841 (KR); Sohn, In Sung, Asan-si ChungCheongNam-Do 336-841 (KR); Jung, Sang Cheol, Asan-si ChungCheongNam-Do 336-841 (KR)
(74) Representative: Gulde Hengelhaupt Ziebig & Schneider

(57) **Abstract**

An optical filter for reducing color shift is disposed in front of a display panel of an LCD. The optical filter includes a color shift-reducing layer, which includes a background layer and a plurality of engraved or raised lens sections formed on the background layer such that the lens sections are spaced apart from each other, and an external light-blocking layer. light emitted from the display panel has different colors depending on the viewing angle and the grayscale level, owing to the birefringence characteristics of liquid crystal molecules. The lens sections diffuse a portion of the light incident onto the lens sections, so that the portion of the light is mixed with another portion of the light passing between adjacent lens sections. The external light-blocking layer contains a light-absorbing material, which is a black material that absorbs all wavelengths of visible light.

## Description

### CROSS REFERENCE TO RELATED APPLICATION

The present application claims priority from Korean Patent Application Number 10-2011-0050615 filed on May 27, 2011, the entire contents of which application are incorporated herein for all purposes by this reference.

### BACKGROUND OF THE INVENTION

### Field of the Invention

The present invention relates to an optical filter for a liquid crystal display (LCD) and an LCD having the same, and more particularly, to an optical filter for reducing color shift, which is provided with a color shift-reducing layer that has engraved or raised lens sections and an external light-blocking layer in order to reduce color shift depending on the viewing angle, and an LCD having the same.

### Description of Related Art

In response to the emergence of the advanced information society, components and devices related to image displays have been significantly improved and rapidly disseminated. Among them, image display devices have been widely distributed for use in TVs, personal computer (PC) monitors, and the like. Moreover, attempts are underway to simultaneously increase the size and reduce the thickness of such display devices.

In general, a liquid crystal display (LCD) is one type of flat panel display, and displays images using liquid crystals. The LCD is widely used throughout industry since it has the advantages of light weight, low drive voltage and low power consumption compared to other display devices.

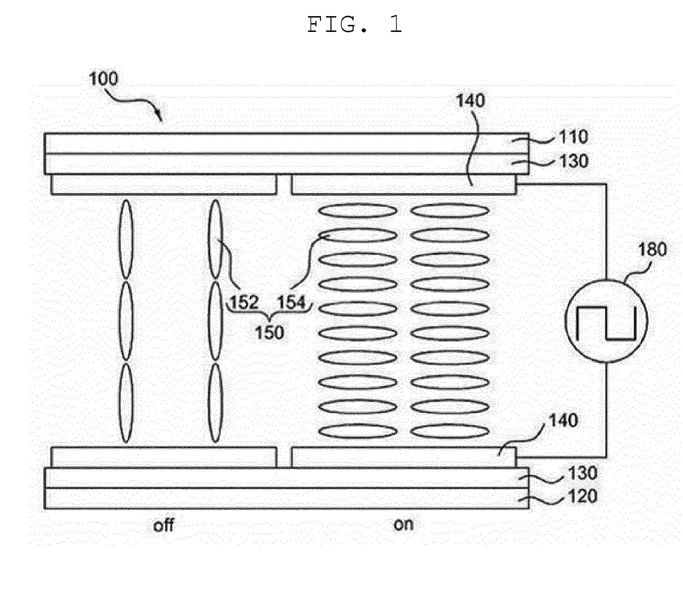

FIG. 1 is a conceptual view schematically showing the basic structure and operating principle of an LCD 100.

With reference by way of example to a conventional vertical alignment (VA) LCD, two polarizer films 110 and 120 are arranged such that their optical axes are oriented perpendicular to each other. Liquid crystal molecules 150 having birefringence characteristics are interposed and arranged between two transparent substrates 130, which are coated with transparent electrodes 140. When an electric field is applied from a power supply unit 180, the liquid crystal molecules move and are aligned perpendicular to the electric field.

Light emitted from a backlight unit is linearly polarized after passing through the first polarizer film 120. As shown in the left of FIG. 1, the liquid crystal molecules remain perpendicular to the substrates when no power is applied. As a result, light that is in a linearly polarized state is blocked by the second polarizer film 110, the optical axis of which is perpendicular to that of the first polarizer film 120.

In the meantime, as shown in the right of FIG. 1, when power is on, the electric field causes the liquid crystal molecules to become horizontally aligned such that they are parallel to the substrates, between the two orthogonal polarizer films 110 and 120. Thus, the linearly polarized light from the first polarizer film is converted into another kind of linearly polarized light, the polarization of which is rotated by 90°, circularly polarized light, or elliptically polarized light while passing through the liquid crystal molecules before it reaches the second polarizer film. The converted light is then able to pass through the second polarizer film. It is possible to gradually change the orientation of the liquid crystal from the vertical orientation to the horizontal orientation by adjusting the intensity of the electric field, thereby allowing control of the intensity of light emission.

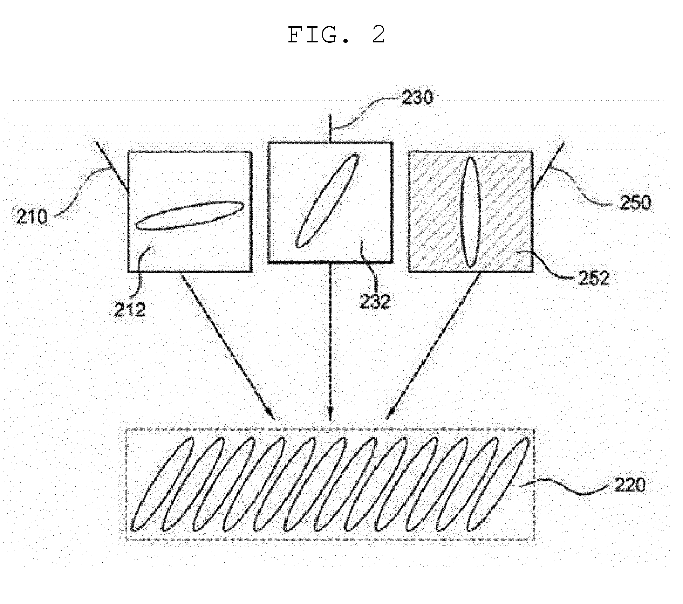

FIG. 2 is a conceptual view showing the orientation and optical transmittance of liquid crystals depending on the viewing angle.

When liquid crystal molecules are aligned in a predetermined direction within a pixel 220, the orientation of the liquid crystal molecules varies depending on the viewing angle.

When viewed from the front left (210), the liquid crystal molecules look as if they are substantially aligned along the horizontal orientation 212, and the screen is relatively bright. When viewed from the front along the line 230, the liquid crystal molecules are seen to be aligned along the orientation 232, which is the same as the orientation inside the pixel 220. In addition, when viewed from the front left (250), the liquid crystal molecules look as if they are substantially aligned along the vertical orientation 252, and the screen is somewhat darker.

Accordingly, the viewing angle of the LCD is greatly limited compared to other displays, which intrinsically emit light, since the intensity and color of light of the LCD varies depending on changes in the viewing angle. A large amount of research has been carried out with the aim of increasing the viewing angle.

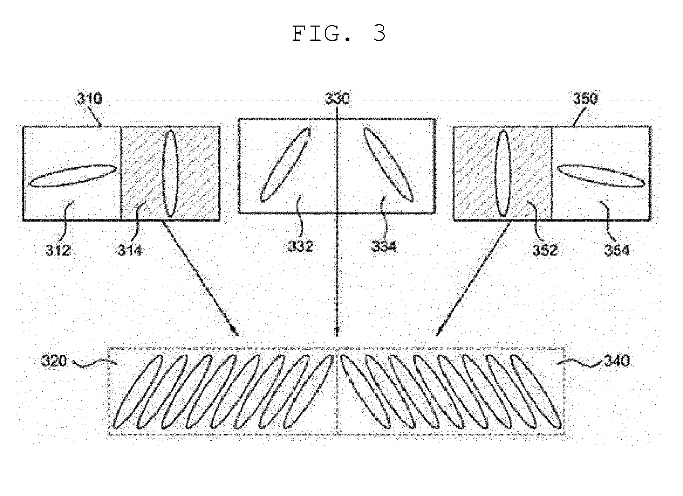

FIG. 3 is a conceptual view showing a conventional attempt to reduce variation in the contrast ratio and color shift depending on the viewing angle.

Referring to FIG. 3, a pixel is divided into two pixel parts, that is, first and second pixel parts 320 and 340, in which the orientations of liquid crystals are symmetrical to each other. Either the liquid crystals oriented as shown in the first pixel part 320 or the liquid crystals oriented as shown in the second pixel part 340 can be seen, depending on the viewing direction of a viewer. The intensity of light reaching the viewer is the total intensity of light of the two pixel parts.

When viewed from the front left (310), liquid crystal molecules in the first pixel part 320 look as if they are aligned along the horizontal orientation 312, and liquid crystal molecules in the second pixel part 320 look as if they are aligned along the vertical orientation 314. Thus, the first pixel part 320 makes the screen look bright. Likewise, when viewed from the front right (350), the liquid crystal molecules in the first pixel part 320 look as if they are aligned along the vertical orientation 352, and the liquid crystal molecules in the second pixel part 340 look as if they are aligned along the horizontal orientation 354. Then, the second pixel part 340 can make the screen look bright. In addition, when viewed from the front, the liquid crystal molecules are seen to be aligned along the orientations 332 and 334, which are the same as the orientations inside the pixel parts 320 and 340. Accordingly, the brightness of the screen observed by the viewer remains the same or similar, and is symmetrical about the vertical center line of the screen, even when the viewing angle changes. This, as a result, makes it possible to reduce variation in the contrast ratio and color shift depending on the viewing angle.

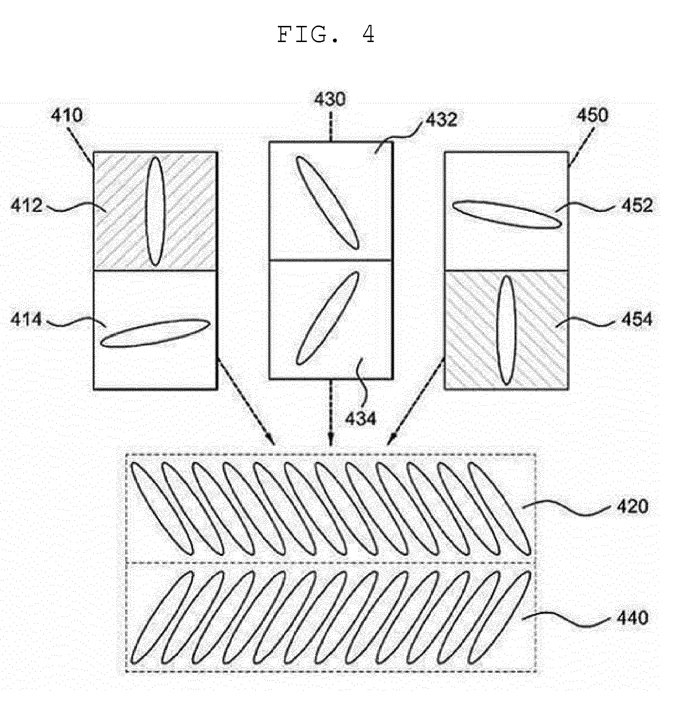

FIG. 4 is a conceptual view showing another conventional approach for reducing variation in the contrast ratio and color shift depending on to the viewing angle.

Referring to FIG. 4, an optical film 420 having birefringence characteristics is added. The birefringence characteristics of the optical film 420 are the same as those of liquid crystal molecules inside a pixel 440 of an LCD panel, and are symmetrical with the orientation of the liquid crystal molecules. Due to the orientation of the liquid crystal molecules inside the pixel 440 and the birefringence characteristics of the optical film, the intensity of light reaching the viewer is the total intensity of light from the optical film 420 and the pixel 440.

Specifically, when viewed from the front left (410), the liquid crystal molecules inside the pixel 440 look as if they are aligned along the horizontal orientation 414, and the imaginary liquid crystals produced by the optical film 420 look as if they are aligned along the vertical orientation 412. The resultant intensity of light is the total intensity of light from the optical film 420 and the pixel 440. Likewise, when viewed from the front right (450), the liquid crystal molecules inside the pixel 440 look as if they are aligned along the vertical orientation 454 and the imaginary liquid crystals produced by the optical film 420 look as if they are aligned along the horizontal orientation 452. The resultant intensity of light is the total intensity of light from the optical film 420 and the pixel 440. In addition, when viewed from the front, the liquid crystal molecules are seen to be aligned along the orientations 434 and 432, which are the same as the orientation inside the pixel 440 and the double-refracted orientation of the optical film 420, respectively.

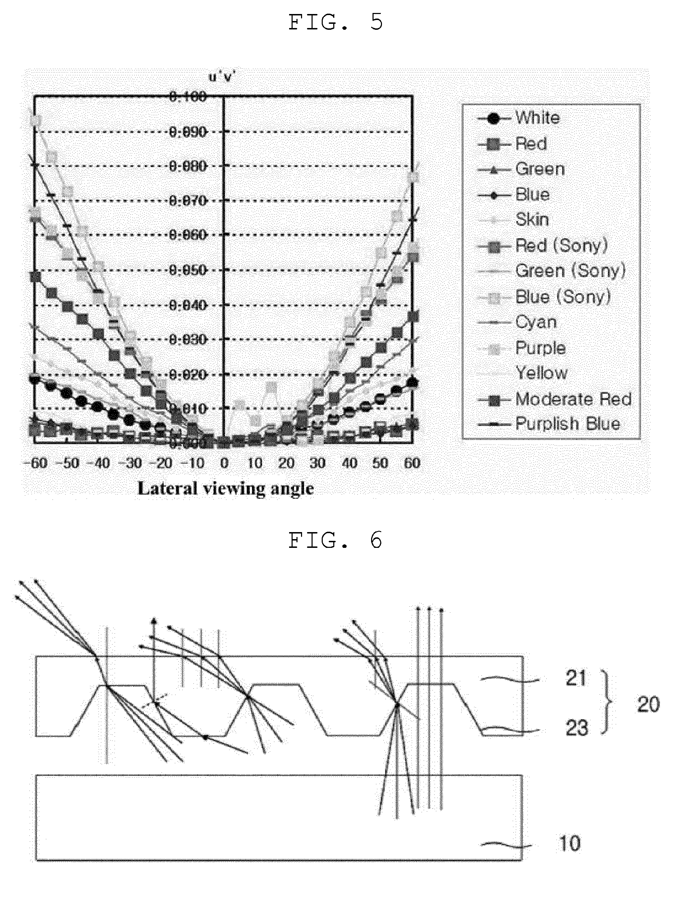

However, even if the approaches described above are applied, as shown in FIG. 5, color shift still occurs depending on the viewing angle, and the color changes when the viewing angle increases.

In addition, optical films and display devices of the related art, in particular, twisted nematic (TN) mode LCDs, have the problem of gamma-curve distortion and grayscale inversion.

The information disclosed in this Background of the Invention section is only for the enhancement of understanding of the background of the invention, and should not be taken as an acknowledgment or any form of suggestion that this information forms a prior art that would already be known to a person skilled in the art.

### BRIEF SUMMARY OF THE INVENTION

Various aspects of the present invention provide an optical filter for a liquid crystal display (LCD) that can reduce color shift that occurs in response to an increase in the viewing angle and an LCD having the same.

Also provided are an optical filter for an LCD that can prevent ghosting and hazing while reducing color shift while reducing color shift and an LCD having the same.

Also provided are an optical filter for an LCD that can reduce gamma-curve distortion and grayscale inversion and an LCD having the same.

Also provided are an optical filter for an LCD that can prevent the occurrence of hazing due to external light while reducing a decrease in the bright-room contrast ratio (BRCR) and an LCD having the same.

The above and other aspects, features and advantages of certain exemplary embodiments of the invention will be more apparent to a person having ordinary skill in the art from the following description.

In an aspect of the present invention, provided is an optical filter being adapted for reducing color shift in an LCD, the optical filter being adapted to be disposed in front of a display panel of the LCD. The optical filter includes a color shift-reducing layer; and an external light-blocking layer. The color shift-reducing layer includes a background layer and a plurality of engraved or raised lens sections formed on the background layer such that the lens sections are spaced apart from each other. Light emitted from the display panel has different colors depending on the viewing angle and the grayscale level, owing to the birefringence characteristics of liquid crystal molecules. The lens sections diffuse a portion of the light incident onto each of the lens sections, so that the portion of the light is mixed with another portion of the light passing between adjacent lens sections. The external light-blocking layer contains a light-absorbing material.

In an exemplary embodiment, the light-absorbing material is a black material that absorbs all wavelengths of visible light. Visible light according to the present invention has wavelengths between 380 nm and 760 nm.

Preferably, the color coordinates of a transmitted color of the external light-blocking layer are such that L* is 50 or less and a* and b* range from -30 to +30 under a D65 light source.

Preferably, the light-absorbing material comprises carbon black.

Preferably, the light-absorbing material is contained in the background layer, and the external light-blocking layer is the background layer. Preferably, the external light-blocking layer comprises the light-absorbing material mixed in a resin or an adhesive.

Preferably, the external light-blocking layer is provided in front of the color shift-reducing layer.

Preferably, the optical filter further comprises a backing, wherein the color shift-reducing layer is a coating that is directly applied on a rear surface of the backing, and the external light-blocking layer is a coating that is directly applied on a front surface of the backing.

Preferably, a respective cross-section of the lens sections comprises an arc of an ellipse.

Preferably, the background layer has adhesiveness in itself.

Preferably, the lens sections have a depth-to-width ratio of 0.25 or greater.

Preferably, the lens sections have a spacing-to-pitch ratio ranging from 0.5 to 0.95.

Preferably, the lens sections have a pitch of 45µm or less.

In another aspect of the present invention, provided a liquid crystal display is disclosed, the liquid crystal display comprising an optical filter according to at least one of the above-mentioned features.

Preferably, the lens sections of the optical filter for reducing color shift are formed on a rear surface of the background layer that faces the liquid crystal display panel.

Preferably, the optical filter for reducing color shift is in close contact with the liquid crystal display panel. More preferably, the optical film directly contacts the liquid crystal display or a minimum distance between the optical film and the liquid crystal display is less than 1 mm.According to exemplary embodiments of the invention, it is possible to increase the viewing angle and improve the image quality of a display device by reducing color shift that occurs in response to an increase in the viewing angle.

In addition, according to exemplary embodiments of the invention, it is possible to reduce ghosting and hazing while reducing color shift.

Furthermore, according to exemplary embodiments of the invention, it is possible to reduce gamma-curve distortion and grayscale inversion.

In addition, according to exemplary embodiments of the invention, it is possible to prevent the occurrence of hazing due to external light while reducing the decrease in the BRCR.

The methods and apparatuses of the present invention have other features and advantages which will be apparent from, or are set forth in greater detail in the accompanying drawings, which are incorporated herein, and in the following Detailed Description of the Invention, which together serve to explain certain principles of the present invention.

### BRIEF DESCRIPTION OF THE DRAWINGS

FIG. 1 is a conceptual view schematically showing the basic structure and operating principle of a liquid crystal display (LCD);

FIG. 2 is a conceptual view showing the orientation and optical transmittance of liquid crystals depending on the viewing angle;

FIG. 3 is a conceptual view showing a conventional attempt to reduce variation in the contrast ratio and color shift depending on the viewing angle; and

FIG. 4 is a conceptual view showing another conventional attempt to reduce variation in the contrast ratio and color shift depending on the viewing angle;

FIG. 5 is a graph showing color shift depending on the viewing angle for an LCD on which an optical film of the present invention is not mounted;

FIG. 6 to FIG. 8 are cross-sectional views showing color shift-reducing layers according to comparative examples;

FIG. 9 is a view showing a method of manufacturing a color shift-reducing layer according to a comparative example;

FIG. 10 is a view showing the relationship between the depth to width ratio of the lens sections and the rate of color shift reduction;

FIG. 11 is a view showing the relationship between the spacing to pitch ratio of the lens sections and the rate of color shift reduction;

FIG. 12 is a view showing the relationship between the spacing to pitch ratio of the lens sections and transmittance;

FIG. 13 to FIG. 18 are views showing the relationship between the cross-sectional shape of the lens sections and ghosting;

FIG. 19 to FIG. 24 are views showing that ghosting and hazing can be reduced by disposing a color shift-reducing layer according to a comparative example such that it is in close contact with a display panel;

FIG. 25 is a graph showing the result obtained by attaching an adhesive color shift-reducing layer according to a comparative example to a display panel in an super-patterned vertical alignment (S-PVA) mode LCD TV, which has the color shift shown in FIG. 5, and then measuring the rate of color shift reduction;

FIG. 26 is a graph showing color shift in a super-in-plane switching (S-IPS) mode LCD TV without an adhesive color shift-reducing layer according to a comparative example;

FIG. 27 is a graph showing the result obtained by attaching an adhesive color shift-reducing layer according to a comparative example to the display panel in the LCD TV of FIG. 26 and then measuring the rate of color shift reduction;

FIG. 28 to FIG. 31 are graphs showing that a color shift-reducing layer according to a comparative example reduces color shift, grayscale inversion and gamma-curve distortion in an LCD monitor (model number: B2440MH) that employs a cold cathode fluorescent lamp (CCFL) backlight unit (BLU) and a twisted nematic (TN) panel;

FIG. 32 to FIG. 35 are graphs showing that a color shift-reducing layer according to a comparative example reduces color shift, grayscale inversion and gamma-curve distortion in an LCD monitor (model number: BX2440) that employs an light-emitting diode (LED) BLU and a TN panel;

FIG. 36 to FIG. 39 are graphs showing that a color shift-reducing layer according to a comparative example reduces color shift and gamma-curve distortion in a 46" LCD TV (model number: LH46CSPLBC) that employs an S-PVA panel;

FIG. 40 to FIG. 42 are views showing the relationship between the size of the lens sections and ghosting; and

FIG. 43 is a view showing the relationship between the size of the lens sections and a moiré phenomenon; and

FIG. 44 is a cross-sectional view schematically showing an optical filter for reducing color shift according to an exemplary embodiment of the invention.

### DETAILED DESCRIPTION OF THE INVENTION

Reference will now be made in detail to various embodiments of the present invention, examples of which are illustrated in the accompanying drawings and described below. While the invention will be described in conjunction with exemplary embodiments thereof, it is to be understood that the present description is not intended to limit the invention to those exemplary embodiments. On the contrary, the invention is intended to cover not only the exemplary embodiments, but also various alternatives, modifications, equivalents and other embodiments that may be included within the scope of the invention as defined by the appended claims.

### Comparative examples

A description will be given below of comparative examples. The principle by which color shift is reduced in the present invention is described first, and followed by a description of mechanism by which ghosting and hazing are prevented using a color shift-reducing layer. How the color shift-reducing layer is effective for reducing gamma-curve distortion and grayscale inversion is also described.

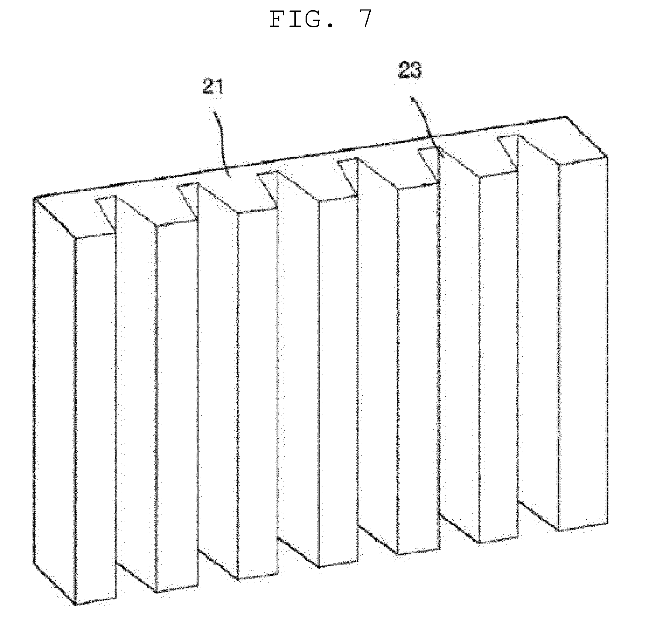

FIG. 6 and FIG. 7 are cross-sectional views showing a color shift-reducing layer according to a comparative example.

The color shift-reducing layer 20 is typically disposed in front of a display panel 10.

As shown in the figures, the color shift-reducing layer 20 includes a background layer 21 and lens sections 23.

The background layer 21 is formed as a layer of light-transmitting material. The background layer 21 may be made of transparent polymer resin, in particular, ultraviolet (UV)-curable transparent resin.

The lens sections 23 are formed by engraving or raising the background layer 21 to a predetermined depth or height. The lens sections 23 reduce color shift by refracting light that is incident thereon. The lens sections 23 can reduce the color change that occurs in response to an increase in the viewing angle using a color mixing effect. It is possible to allow more of the light that is emitted in the direction perpendicular to the plane of the display panel to pass through by reducing the width of the lens sections such that it is smaller than the spacing between the lens sections.

The lens sections serve to change the direction of the portion of light that is emitted perpendicular to the plane of the display panel, such that it is not perpendicular thereto, and to change the direction of the portion of light that is not originally emitted perpendicular thereto, such that it is emitted perpendicular thereto. That is, the lens sections can cause color mixing by changing the direction of light based on the viewing angle, thereby reducing color shift.

The lens sections 23 may have a pattern selected from among, but not limited to, stripes having a polygonal cross-section, waves having a polygonal cross-section, a matrix having a polygonal cross-section, a honeycomb having a polygonal cross-section, dots having a polygonal cross-section, stripes having a semicircular cross-section, waves having a semicircular cross-section, a matrix having a semicircular cross-section, a honeycomb having a semicircular cross-section, dots having a semicircular cross-section, stripes having a semi-elliptical cross-section, waves having a semi-elliptical cross-section, a matrix having a semi-elliptical cross-section, a honeycomb having a semi-elliptical cross-section, dots having a semi-elliptical cross-section, stripes having a semi-oval cross-section, waves having a semi-oval cross-section, a matrix having a semi-oval cross-section, a honeycomb having a semi-oval cross-section, and dots having a semi-oval cross-section.

Here, the term "polygonal cross-section" may include, but is not limited to, triangular, trapezoidal and quadrangular cross-sections. In addition, the term "semi-oval cross-section" may include curved profiles other than an arc of a circle and an arc of an ellipse. Further, the terms "semicircular cross-section," "semi-elliptical cross-section," and "semi-oval cross-section" are not limited to the shapes that are obtained by dividing circular, elliptical, or oval shapes precisely into two sections, but include shapes in which part of the outline of the cross-section of the lens sections includes an arc, an elliptical arc, or a parabola. That is, the "semi-elliptical cross-section" may have a shape that has two elliptical arc lateral sides and a linear bottom side.

The color shift-reducing layer of comparative examples is not limited to the above-described shapes, but may have a variety of other shapes. A shape that has a bilaterally symmetrical cross-section is preferable.

In addition, the pattern constituted of stripes may also include a variety of patterns, such as a horizontal stripe pattern, a vertical stripe pattern, and the like. The horizontal stripe pattern is effective in compensating for vertical viewing angles. The vertical stripe pattern, as shown in FIG. 7, is effective in compensating for horizontal viewing angles.

In order to prevent a moiré phenomenon, the lens sections 23 may be formed to have a predetermined bias angle with respect to the edge of the background layer 21. For example, in the stripe pattern, the stripes may have a predetermined angle of inclination with respect to the horizontal or vertical direction.

It is preferred that the lens sections 23 be periodically formed on one surface of the background layer 21, as shown in FIG. 7. The lens sections 23 are spaced apart from each other and are parallel to each other.

Although FIG. 6 shows an example in which the lens sections 23 are engraved into the background layer 21, the lens sections 23 are not limited thereto. Alternatively, the lens sections may be raised sections on the background layer.

The lens sections may be formed on the rear surface of the background layer, which faces the display panel, or on the front surface of the background layer, which faces the viewer. In addition, the lens sections may be formed on both surfaces of the background layer.

Here, a plurality of lens sections is formed such that they are spaced apart from each other. This means that the plurality of lens sections is formed on the cross-section of an optical film such that they are spaced apart from each other, and that a flat surface of the background layer, which allows light to pass through, is present between adjacent lens sections. Accordingly, the lens sections having a predetermined pattern, e.g., a matrix having a semi-elliptical cross-section, appear as a single lens structure having a matrix pattern when they are viewed from the viewer, whereas the lens sections appear to be spaced apart from each other on the cross-section of the optical film. Therefore, the lens sections of the invention may employ this arrangement.

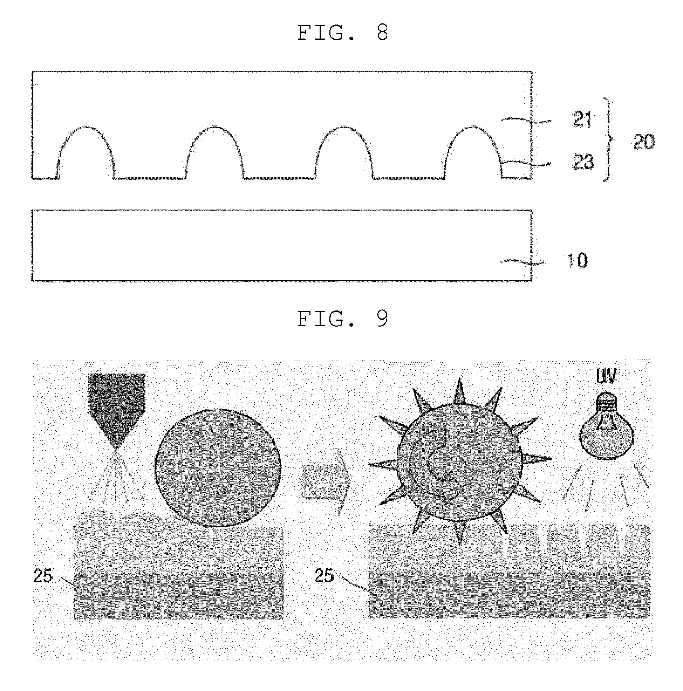

FIG. 9 is a view showing a method for preparing a color shift-reducing layer according to a comparative example.

A background layer 21 may be formed on a backing 25.

The backing 25 is, preferably, a transparent resin film or a glass substrate that is UV transparent. Available examples of material for the backing may include, but are not limited to, polyethylene terephthalate (PET), polycarbonate (PC), polyvinyl chloride (PVC) and triacetate cellulose (TAC). The refractive index of the backing is preferably the same as that of the background layer, but the invention is not limited thereto.

A method of preparing the lens sections 23 includes the step of applying a UV-curable resin on one surface of the backing 25, and the step of forming engraved recesses in the UV-curable resin using a forming roll that has a pattern that is the reverse of that of the lens sections on the surface thereof while radiating UV rays onto the UV-curable resin. Afterwards, the preparation of the background layer 21 having the lens sections 23 is finalized by radiating UV rays onto the UV-curable resin.

However, the color shift-reducing layer of comparative examples is not limited thereto, but the recesses of the background layer may be formed using a variety of methods, such as thermal pressing, which uses thermoplastic resin, injection molding, in which thermoplastic resin or thermosetting resin is injected, or the like.

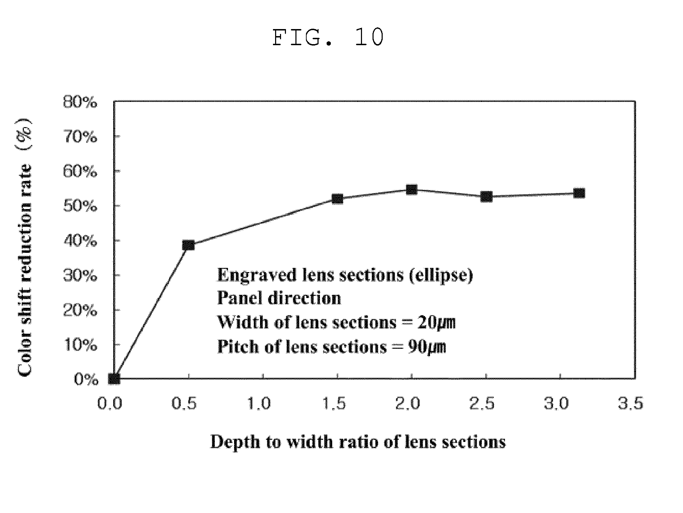

FIG. 10 is a view showing the relationship between the depth (D) to width (W) ratio of the lens sections and the rate of color shift reduction.

The degree of color shift Δu'v' that is discernible with the human eye is 0.004 or greater. A super-in-plane switching (S-IPS) display panel having the best color shift characteristics exhibits a maximum color shift Δu'v' of 0.02 at viewing angles ranging from 0 degrees to 60 degrees. Therefore, the magnitude of color shift reduction is required to be 20% or greater (that is, the maximum Δu'v' is required to be 0.016 or less) in order to attain a reduction in color shift that is discernible with the human eye. It can be appreciated from the graph of FIG. 10 that the depth-to-width ratio of the lens sections is required to be 0.25 or less in order for the color shift reduction to be 20% or greater. In addition, if the depth to width ratio of the lens sections exceeds 6, it will be impossible to manufacture the film using common methods for forming lens sections. Therefore, the depth to width ratio of the lens sections is required to be 6 or less.

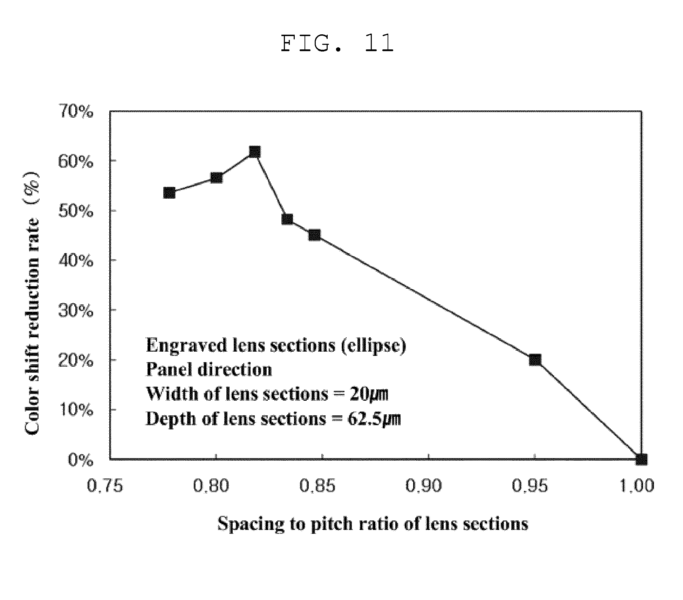

FIG. 11 is a view showing the relationship between the spacing (C) to pitch (P) ratio of the lens sections and the rate of color shift reduction.

Likewise, from the graph of FIG 11, the spacing-to-pitch ratio of the lens sections is required to be 0.95 or less in order for the color shift reduction to be 20% or greater.

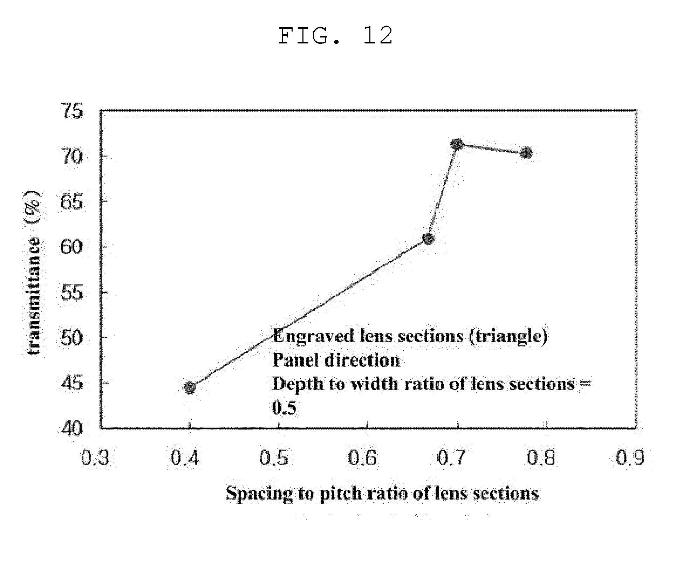

FIG. 12 is a view showing the relationship between the spacing (C) to pitch (P) ratio of the lens sections and transmittance.

As shown in the graph of FIG. 12, the greater the spacing-to-pitch ratio of the lens sections, the greater the light transmittance of the film. A film having a light transmittance of 50% or greater is viable as a commercial product. Accordingly, the spacing-to-pitch ratio of the lens sections is required to be 0.5 or greater in order for the transmittance to be 50% or greater.

Therefore, the graphs shown in FIG. 11 and FIG. 12 show that the spacing-to-pitch ratio of the lens sections is preferably in the range from 0.5 to 0.95.

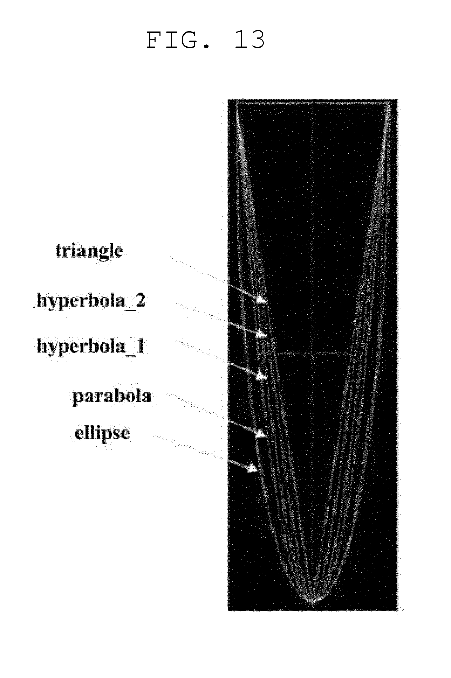

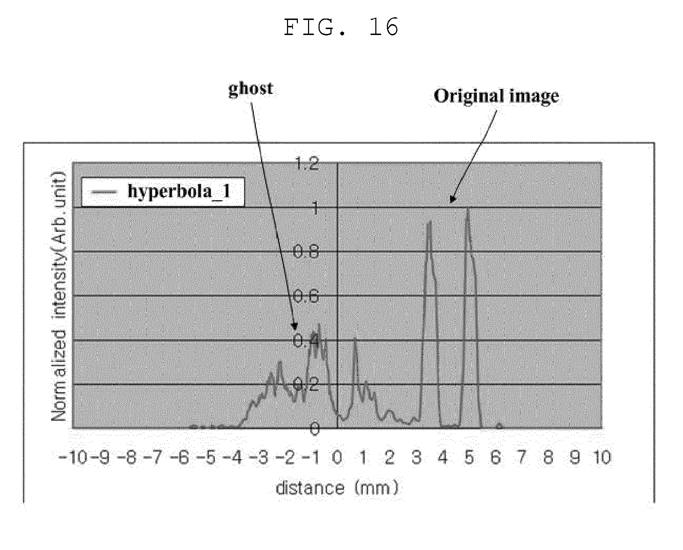

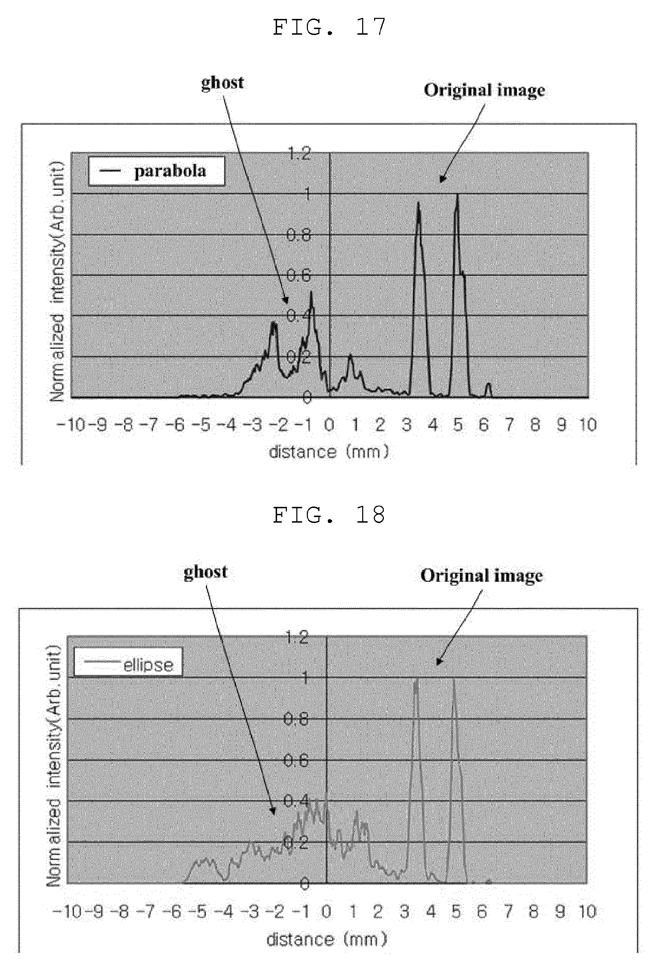

FIG. 13 to FIG. 18 are views showing the relationship between the cross-sectional shape of the lens sections and ghosting.

As shown in FIG. 13, the occurrence of a ghost was observed while the curvature of the lens sections (having a width of 27µm, a depth of 81µm and a pitch of 90µm) was varied. It can be appreciated that lens sections having a semi-elliptical cross section prevent the ghosting most effectively.

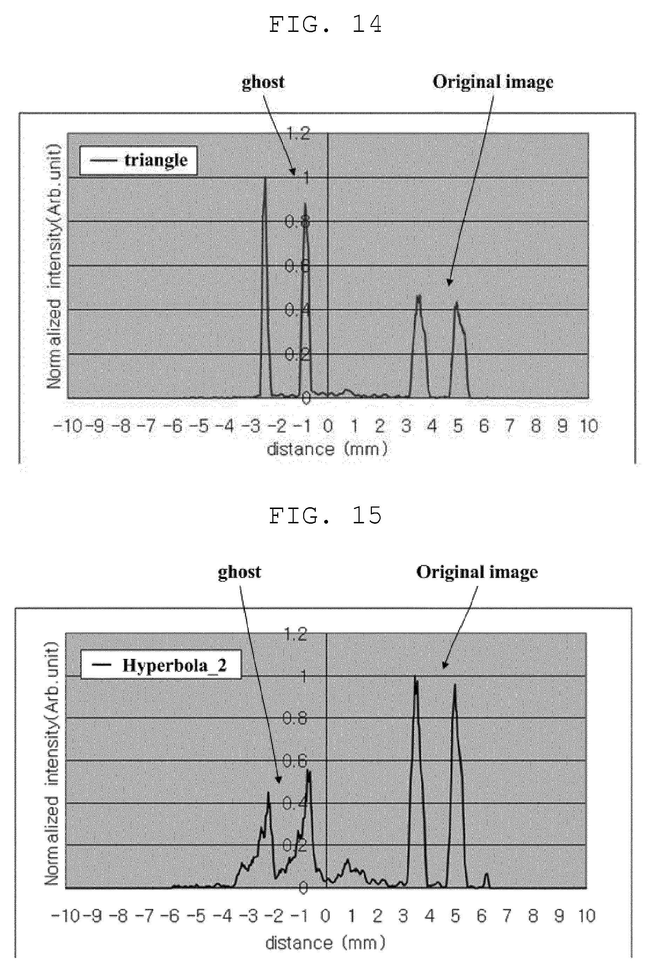

The ghost (false image) is observed more distinctly as the shape is changed from a semi-elliptical shape to a triangular shape, that is, as the curvature decreases. FIG. 14 to FIG 18 are graphs showing the luminance distributions of ghosts compared with those of original images.

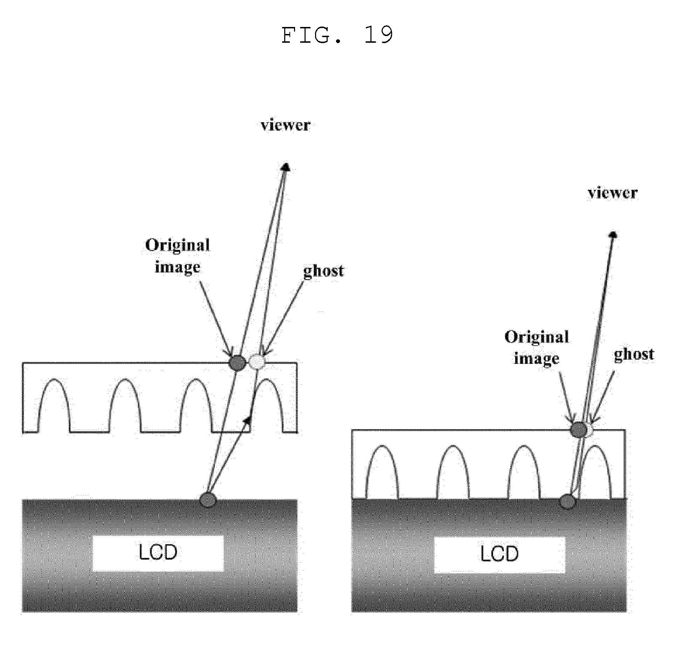

FIG 19 to FIG. 21 are views showing that ghosts and hazing occur when a color shift-reducing layer is spaced apart from a display panel.

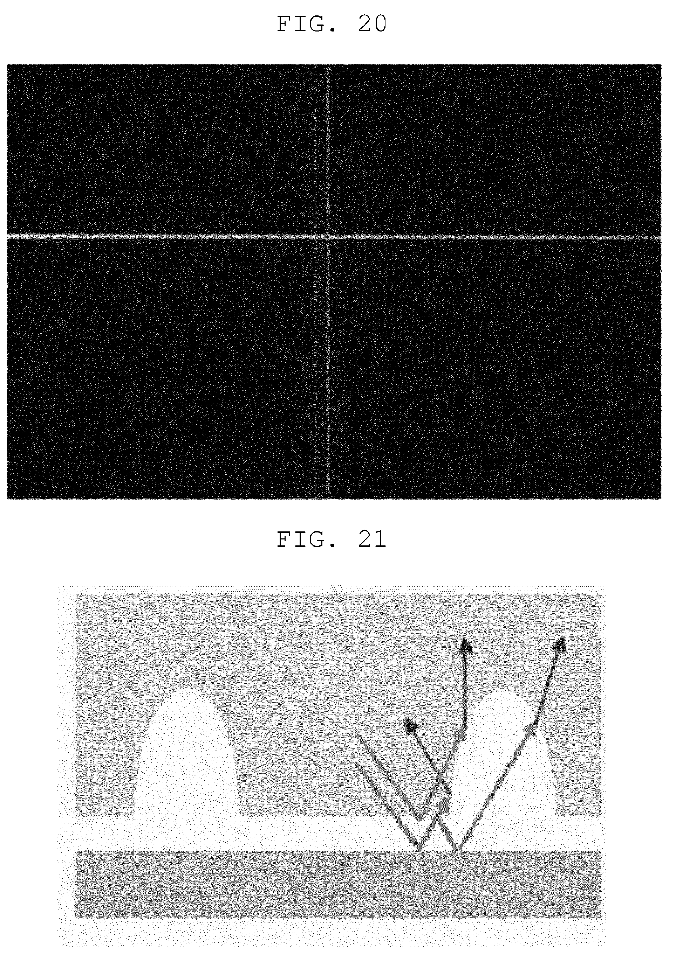

When the color shift-reducing layer according to a comparative example is mounted in front of the display panel, spacing the color shift-reducing layer farther apart from the display panel makes the ghost appear more distinct, as shown in FIG. 19. FIG. 20 is a view showing that a ghost occurs when the color shift-reducing layer is disposed such that it is spaced apart from the display panel. The ghost distorts the image on the display panel. Therefore, a solution that can reduce color shift without creating a ghost is required.

In addition, when the color shift-reducing layer is provided such that it is spaced apart from the display panel, not only the foregoing problem of ghosts, but also the problem of haze occurs, as shown in FIG. 21, since the lens sections diffuse light reflected from the display panel and the flat surfaces between the lens sections. That is, light incident onto the color shift-reducing layer and the display panel is reflected, one or multiple times, from the interface between the color shift-reducing layer and the air (i.e. the air between the color shift-reducing layer and the display panel) and from the interface between the air and the display panel, and is then incident onto the lens sections. This phenomenon reduces the bright-room contrast ratio (BRCR), thereby reducing the visibility of the display device. Therefore, a solution that can prevent ghosts and hazing from occurring in the color shift-reducing layer is required.

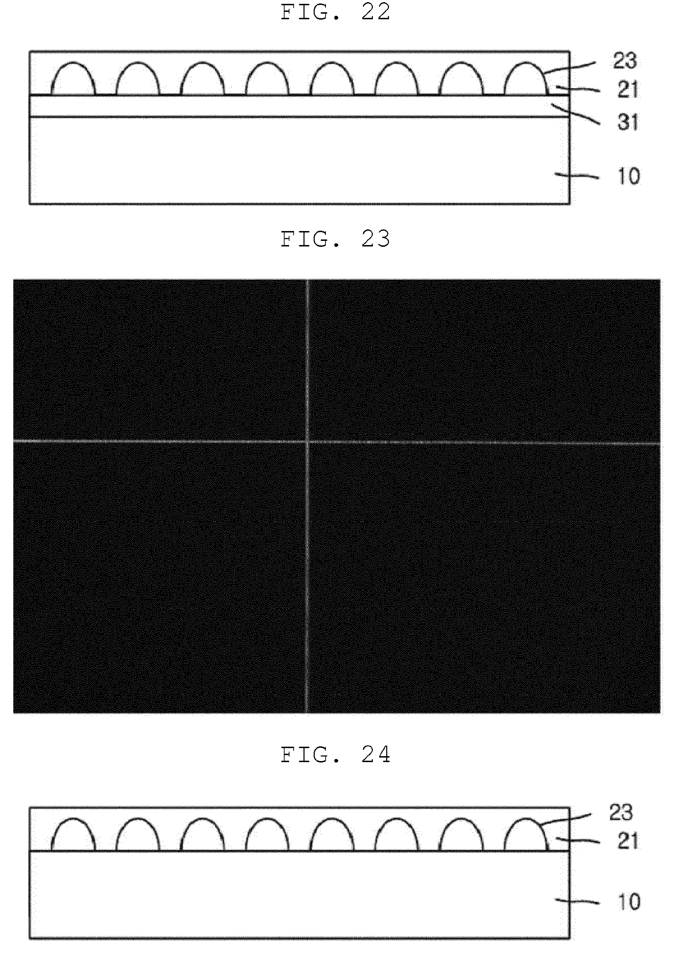

FIG. 22 to FIG. 24 are views showing a solution for removing ghosts and hazing in the color shift-reducing layer according to comparative examples. FIG. 22 is a view schematically showing a display device according to a comparative example, FIG. 23 is a view showing that ghosts have been eliminated from the display device shown in FIG. 21, and FIG. 24 is a view schematically showing a display device according to a comparative example.

It is possible to remove ghosts and hazing by bringing the color shift-reducing layer into close contact with the display panel. For example, it is possible to prevent ghosting and hazing and improve transmittance by attaching the color shift-reducing layer to the display panel via an adhesive 31, as shown in FIG. 22, or by forming a background layer of a material having an adhesive property in itself such that the background layer is directly attached to the display panel, as shown in FIG. 24. In addition, it is also possible to simply bring the color shift-reducing layer into close contact with the display panel without adhering it thereto such that no air gap is interposed between the color shift-reducing layer and the display panel. When the color shift-reducing layer is in close contact with the display panel, it is difficult to distinguish the ghost from the original image because the gap between the ghost and the original image is very small.

Here, it is also preferable that the lens sections be directed toward the display panel instead of toward the viewer, in the interest of reducing hazing. (This is the same when the color shift-reducing layer is spaced apart from the display panel.)

Here, the adhesive background layer may be made of UV-curable transparent elastomer such that it can be easily attached directly to the display panel. Available materials for the background layer may include, but are not limited to, acrylic elastomer, silicone-based elastomer (polydimethylsiloxane: PDMS), urethane-based elastomer, polyvinyl butyral (PMB) elastomer, ethylene vinyl acetate (EVA)-based elastomer, polyvinyl ether (PVE)-based elastomer, saturated amorphous polyester-based elastomer, melamine resin-based elastomer, and the like.

Table 1 below presents the results obtained by measuring hazing in a display device in which the color shift-reducing layer is spaced apart from the display panel, and in the display device shown in FIG. 22.

**Table 1**

| Sample | Luminance measured at a viewing angle of 60º |
|---|---|
| Black panel | 1.73 nit |
| Display panel/Air/Film having lens sections with semi-elliptical cross-section | 12.27 nit |
| Display panel/PSA/Film having lens sections with semi-elliptical cross-section | 2.58 nit |
| Display panel/Air/PET film | 3.87 nit |

Measurement was carried out using illuminant D65, having 240 lux as an external light source by attaching the samples to black substrates and then measuring the luminance of reflected light at a horizontal viewing angle of 60º to the left and right. Since the external light source exists at a place higher than the samples, specular reflections could be observed from below the samples, and irregular reflections could be observed from all directions. Therefore, the reflection hazing caused by external light was measured by detecting irregularly reflected light at a horizontal viewing angle of 60º, rather than from below the samples.

When the color shift-reducing layer was adhered (or directly attached) to the display panel, the reflection haze was measured to be 2.58nit, which is very small compared to when the color shift-reducing layer was spaced apart from the display panel to thus form an air gap therebetween. It can be appreciated that the reflection hazing was significantly reduced even in comparison with the case in which the simple PET film without the lens sections was used.

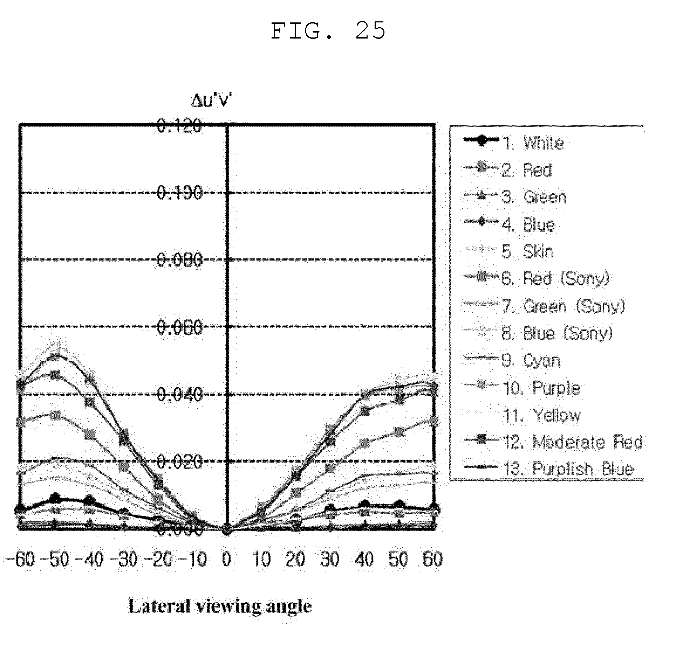

FIG. 25 is a graph showing the result obtained by attaching the adhesive color shift-reducing layer according to a comparative example (in which lens sections have a semi-elliptical cross-section with a width of 30µm, a depth of 60µm and a pitch of 83µm) to the display panel in an S-PVA mode LCD TV, which has the color shift shown in FIG. 5, and then measuring the rate of color shift reduction.

The color shift reduction rate in FIG. 25 was 52%.

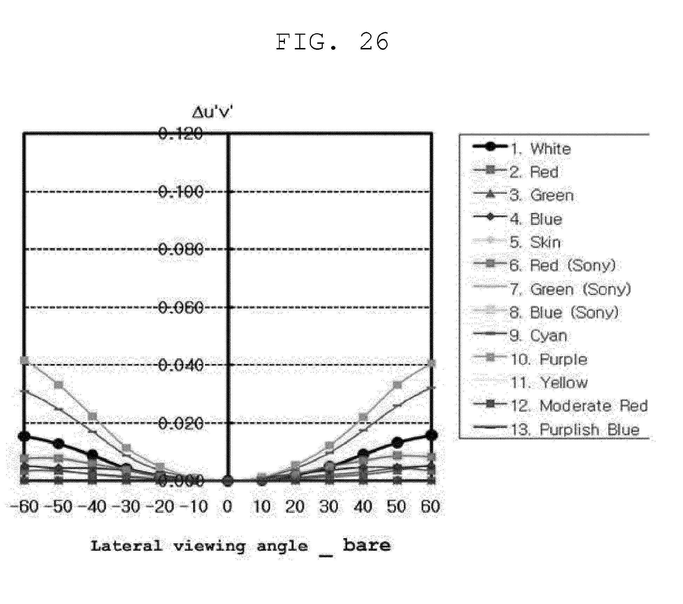

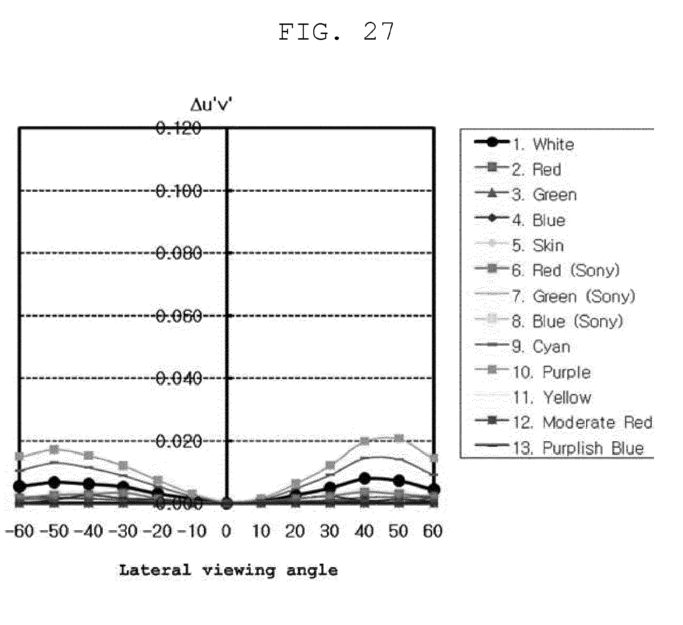

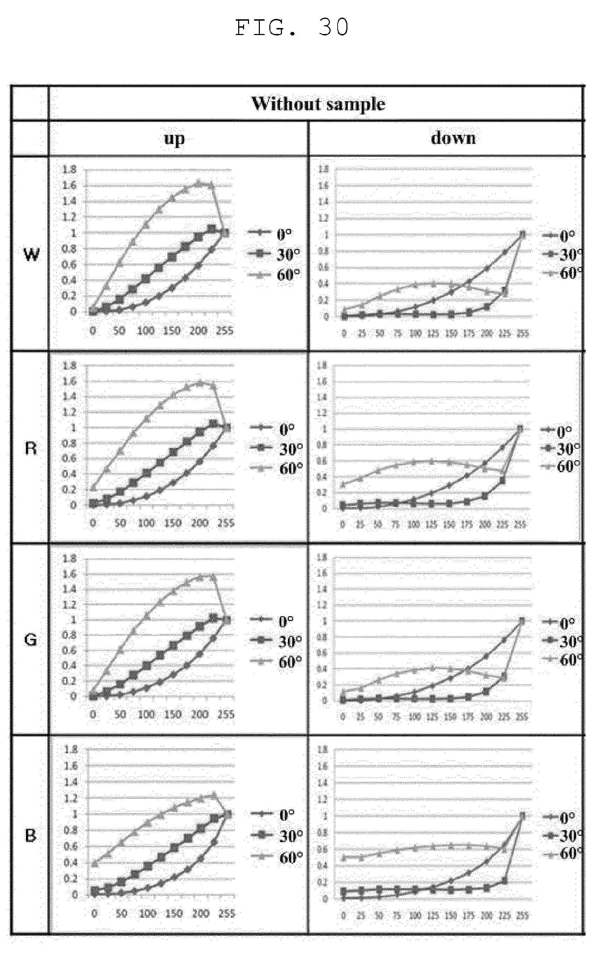

FIG. 26 is a graph showing color shift in an S-IPS mode LCD TV without a color shift-reducing layer according to a comparative example, and FIG. 27 is a graph showing the result obtained by attaching an adhesive color shift-reducing layer according to a comparative example (in which lens sections have a semielliptical cross section with a width of 30µm, a depth of 60µm and a pitch of 83µm) to the display panel in the LCD TV of FIG. 30 and then measuring the rate of color shift reduction.

The color shift reduction was 50%.

In addition, the effect of reducing color shift can also be obtained from a TN mode LCD. In particular, the TN mode LCD can obtain the effect of reducing grayscale inversion, as described later.

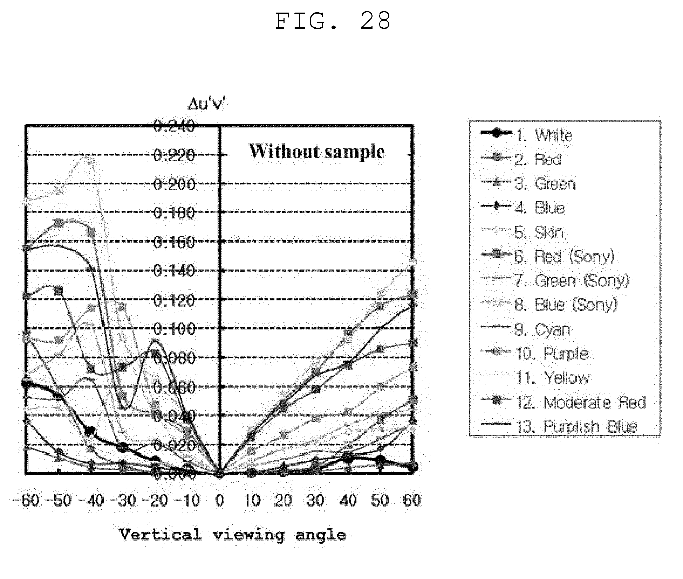

FIG. 28 to FIG. 31 are graphs showing that a color shift-reducing layer according to a comparative example reduces color shift, grayscale inversion and gamma-curve distortion in an LCD monitor (model number: B2440MH) that employs a CCFL BLU and a TN panel.

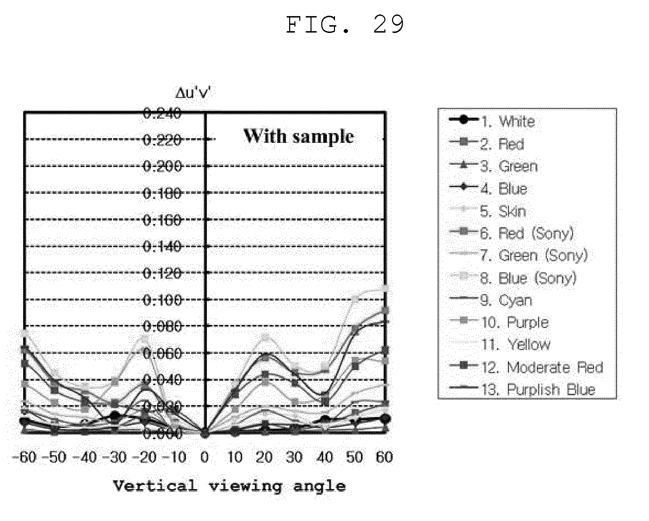

In order to measure the degree of color shift reduction, an SS320 goniometer was used as a measuring device. FIG. 28 was obtained by measuring color coordinates at vertical viewing angles ranging from 0 to 60° at an interval of 10° and then converting the color coordinates into color shift. FIG. 29 was obtained by directly attaching a color shift-reducing layer sample to the display panel and then measuring and converting in the same manner. As can be seen, the ratios of color shift reduction were 25.5% (up) and 65.4% (down).

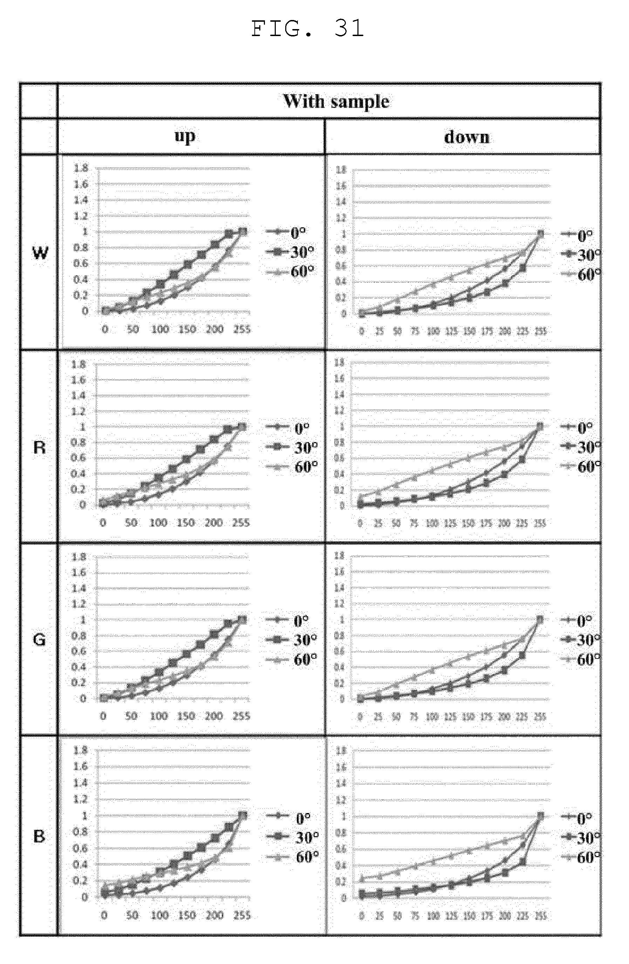

In order to measure the degree of reduction in grayscale inversion and gamma-curve distortion, a CS-1000 was used as a measuring device. FIG. 30 was obtained by measuring luminance with respect to gray levels of W, R, G and B at vertical viewing angles of 0° (the front), 30° and 60°. FIG. 31 was obtained by directly attaching a color shift-reducing layer sample to the display panel and then measuring in the same manner. As can be seen, when the color shift-reducing layer was used, grayscale inversion was reduced as a result of the recovery of gamma-curve linearity, the difference between gamma-curves depending on the angle was significantly decreased, and gamma-curve distortion was decreased.

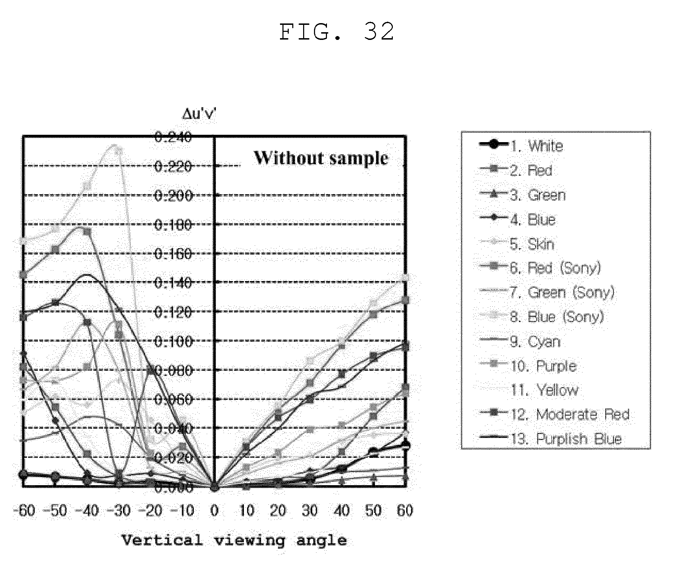

FIG. 32 to FIG. 35 are graphs showing that the color shift-reducing layer according to a comparative example reduces color shift, grayscale inversion and gamma-curve distortion in an LCD monitor (model number: BX2440) that employs an LED BLU and a TN panel.

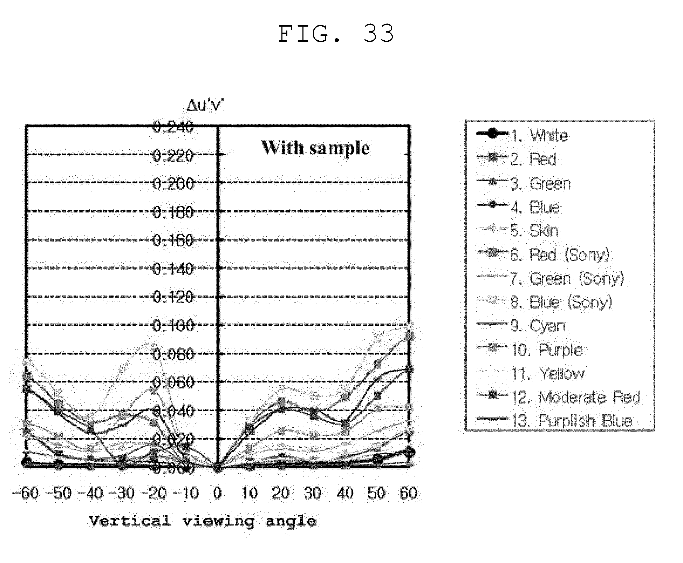

In order to measure the degree of color shift reduction, an SS320 goniometer was used as a measuring device. FIG. 32 was obtained by measuring color coordinates at vertical viewing angles ranging from 0 to 60° at an interval of 10° and then converting the color coordinates into color shift. FIG. 33 was obtained by directly attaching a color shift-reducing layer sample to the display panel and then measuring and converting in the same manner. As can be seen, the ratios of color shift reduction were 30.9% (up) and 63.5% (down).

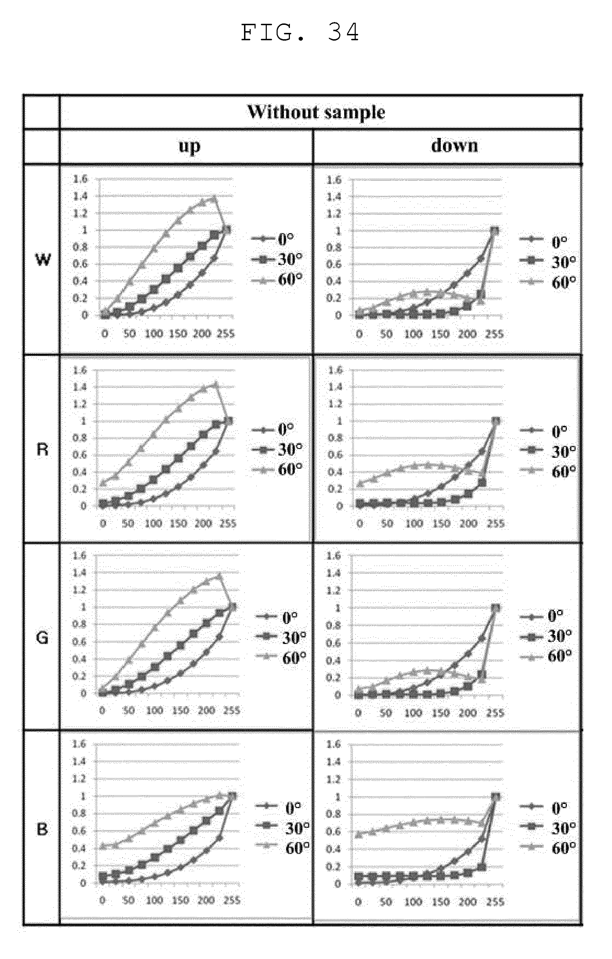

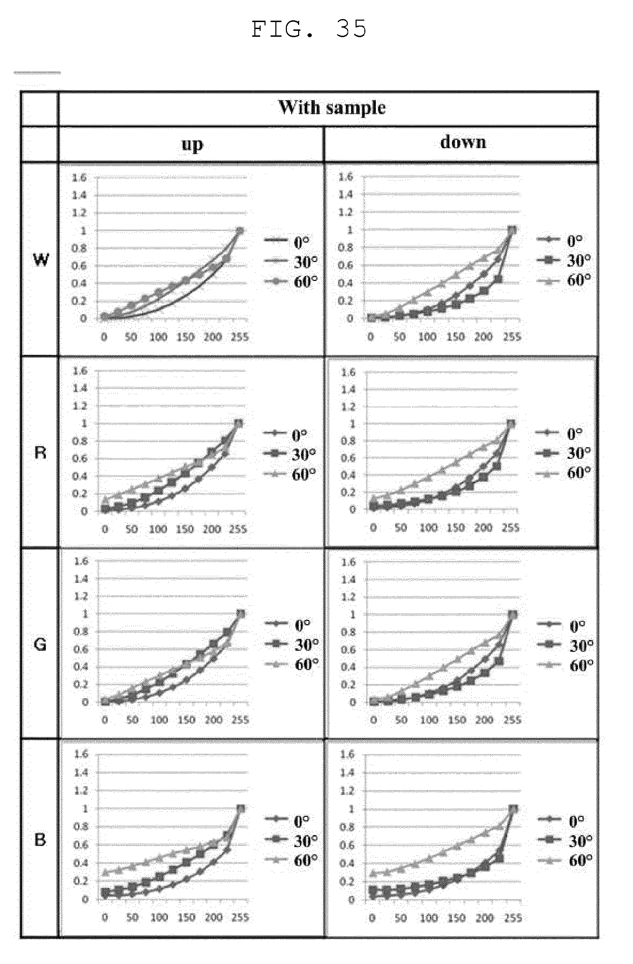

In order to measure the degree of reduction in grayscale inversion and gamma-curve distortion, a CS-1000 was used as a measuring device. FIG. 34 was obtained by measuring luminance with respect to gray levels of W, R, G and B at vertical viewing angles of 30° and 60°. FIG. 35 was obtained by directly attaching a color shift-reducing layer sample to the display panel and then measuring in the same manner. As can be seen, when the color shift-reducing layer was used, grayscale inversion was reduced as a result of the recovery of gamma-curve linearity, the difference between gamma-curves depending on the angle was significantly decreased, and gamma-curve distortion was decreased.

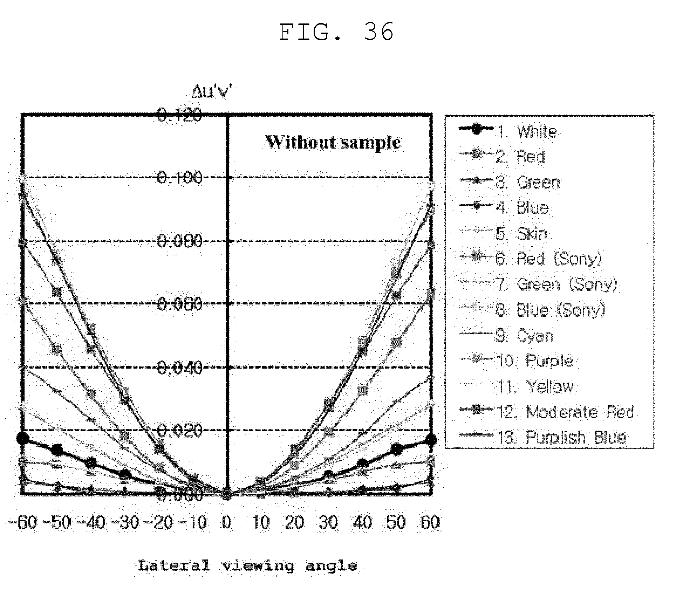

FIG. 36 to FIG. 39 are graphs showing that the color shift-reducing layer according to a comparative example reduces color shift and gamma-curve distortion in a 46" LCD TV (model number: LH46CSPLBC) that employs an S-PVA panel.

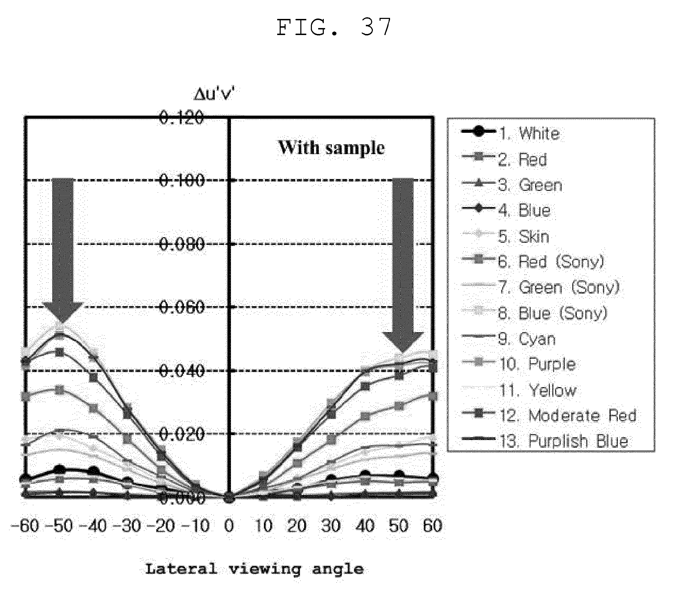

In order to measure the degree of color shift reduction, an SS320 goniometer was used as a measuring device. FIG. 36 was obtained by measuring color coordinates at horizontal watching angles ranging from 0° to 60° at an interval of 10° and then converting the color coordinates into color shift. FIG. 37 was obtained by directly attaching a color shift-reducing layer sample to the display panel and then measuring and converting in the same manner. As can be seen, the ratios of color shift reduction were 48.7% (left) and 53.7% (right).

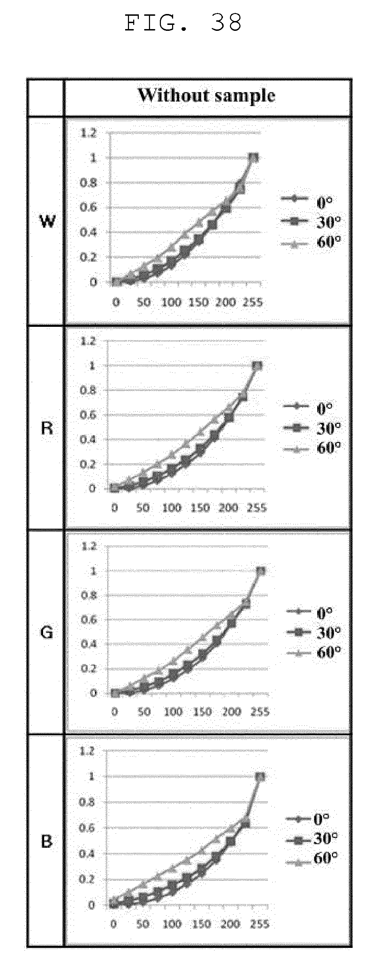

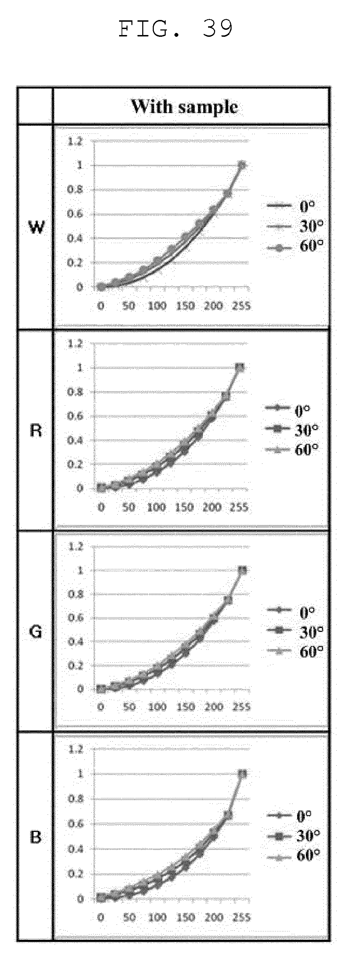

In order to measure the degree of reduction in gamma-curve distortion, a CS-1000 was used as a measuring device. FIG. 38 was obtained by measuring luminance with respect to gray levels of W, R, G and B at vertical viewing angles of 30° and 60°. FIG. 39 was obtained by directly attaching a color shift-reducing layer sample to the display panel and then measuring in the same manner. As can be seen, when the color shift-reducing layer was used, the difference between gamma-curves depending on the angles was significantly decreased.

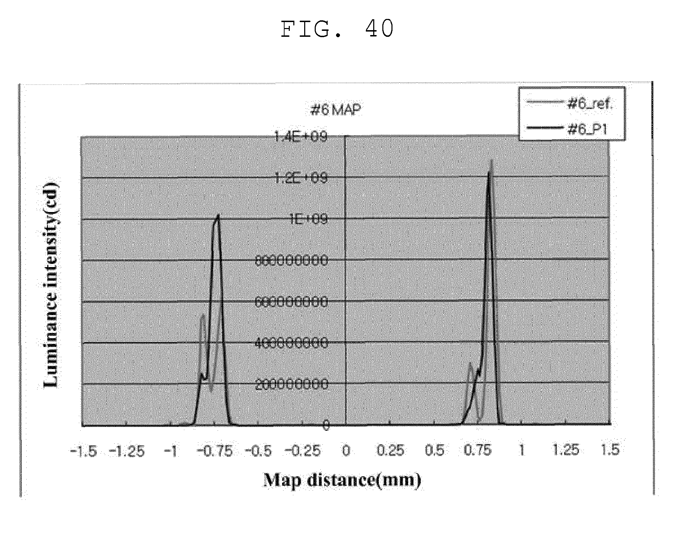

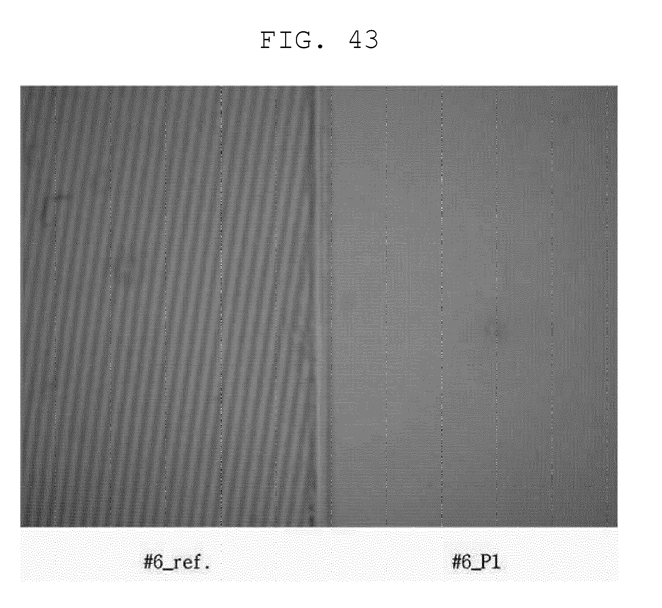

FIG. 40 to FIG. 42 are views showing the relationship between the size of the lens sections and ghosting, and FIG. 43 is a view showing the relationship between the size of the lens sections and a moiré phenomenon.

It is possible to prevent ghosting by providing the color shift-reducing film for reducing color shift, the lens sections of which have a pitch of 45µm or less, such that it is in close contact with the display panel. It is preferred that the lens sections have a pitch of 45µm or less while satisfying both the depth to width ratio and the spacing to pitch ratio described above. If lens sections having a pitch less than 0.01 µm is present, the effect of the lens sections is insignificant, since they act like a thin film that has a refractive index midway between the refractive index of the optical film and the refractive index of the air rather than realizing the above-described color mixing due to reflection, refraction, and scattering of light. Therefore, it is preferred that the pitch of the lens sections be 0.01 µm or greater.

Table 2 below presents the sizes of lens sections of respective samples. Here, the lens sections have the same depth to width ratio and the same spacing to pitch ratio.

Table 2

| Sample | Width (µm) | Depth (µm) | Pitch (µm) |
|---|---|---|---|
| #6_ref. | 20 | 62.5 | 90 |
| #6_P1 | 10 | 31.25 | 45 |
| #6_P2 | 6 | 18.75 | 27 |
| #6_P3 | 4 | 12.5 | 18 |

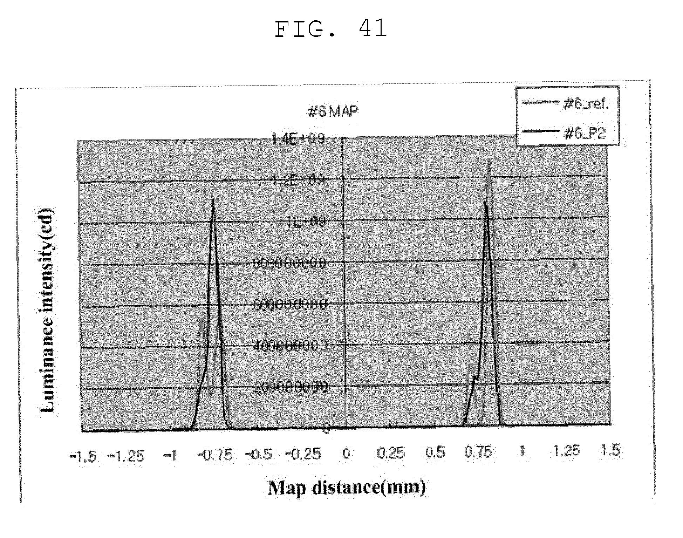

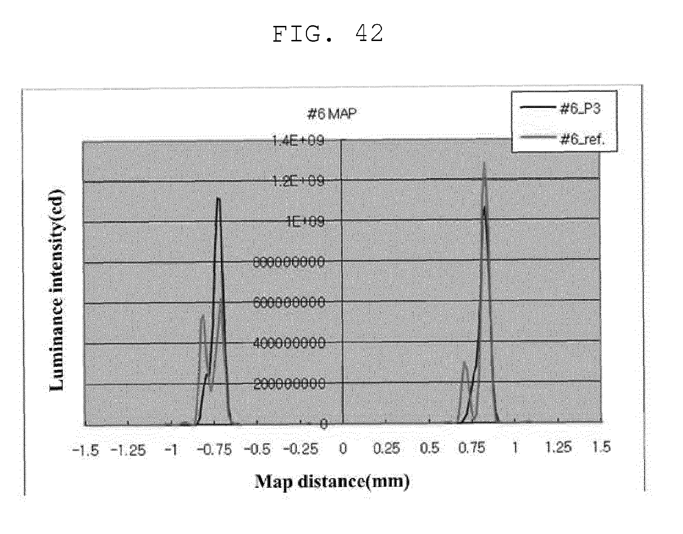

FIG. 40 to FIG. 42 show the result obtained by measuring the luminance of circular images along a line that passes through the center thereof. As shown in the figures, Sample #6_ref. exhibits two peaks at two intersecting points where the line that passes through the center meets the image. In contrast, it can be appreciated that the ghosting gradually decreases in the order of Sample #6_P1 of FIG. 40, Sample #6_P2 of FIG 41, and Sample #6_P3 of FIG. 42.

In addition, as shown in FIG 43, a moiré phenomenon occurs in Sample #6_ref., but does not occur in Sample #6_P1.

### Embodiments of the Invention

Color shift has been greatly reduced by disposing the color shift-reducing layer of the above-described comparative examples in front of the display panel. Furthermore, the problems of ghosting and hazing were overcome by disposing the color shift-reducing layer such that it is in close contact with the front portion of the display panel. It was also possible to reduce gamma-curve distortion and grayscale inversion.

The features for reducing color shift and grayscale inversion and the features for preventing ghosting and hazing in the above-described comparative examples are also essential features in the invention. The invention, however, proposes an additional solution to further prevent the occurrence of hazing due to external light while further increasing the bright-room contrast ratio (BRCR).

As described above with reference to FIG. 21, external light is the reason that the bright-room contrast ratio is decreased. It was possible to considerably reduce hazing and increase the BRCR by bringing the color shift-reducing layer into close contact with the panel. However, external light incident onto the color shift-reducing layer and the panel is still diffused and reflected at the interface between the air and the panel and at the interface between the panel and the color shift-reducing layer, thereby increasing the luminance of a black image. This phenomenon decreases the bright-room contrast ratio, thereby decreasing the visibility of images that the display device reproduces.

In addition, the reflection of external light at the interface between the background layer and the backing and from the front surface of the backing is a reason that reflection hazing is increased. Such hazing causes a milk-white phenomenon to occur on a black screen due to high luminance. The increasing black luminance increases the BRCR and lowers visibility.

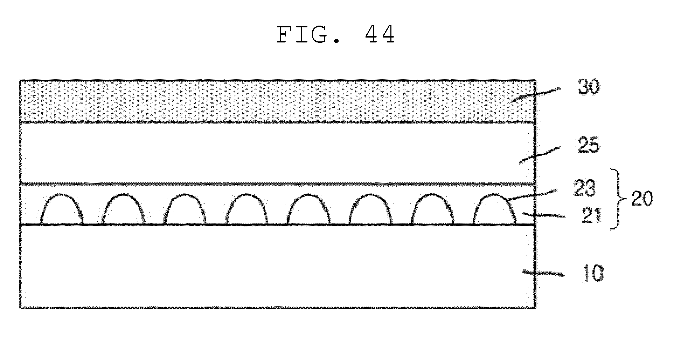

FIG. 44 is a cross-sectional view schematically showing an optical filter according to an exemplary embodiment of the invention, which increases the BRCR.

The optical filter of this embodiment includes a color shift-reducing layer 20 and an external light-blocking layer 30. The optical filter may also include a backing 25.

As shown in FIG. 44, the optical filter includes the external light-blocking layer 30, the backing 25 and the color shift-reducing layer 20, sequentially from the front.

The external light-blocking layer 30 contains therein a light-absorbing material. It is preferred that the external light-blocking layer 30 be disposed in the outer portion with respect to the color shift-reducing layer 20.

The external light-blocking layer 30 may contain a light-absorbing material that has a black absorptivity characteristic, i.e. a black light-absorbing material that has absorptivity for all wavelengths of visible light. As for color coordinates of the transmitted color of the external light-blocking layer, L* is 50 or less, and a* and b* have values ranging from -30 to +30 due to the black light-absorbing material. The black light-absorbing material may be carbon black.

According to an embodiment, it is possible to produce an external light-blocking layer by mixing carbon black colorant 3g (1wt%, liquid type) into a methyl ethyl ketone (MEK) solvent 52g, and then applying the mixture as a coating. In addition, the external light-blocking layer may contain a resin, and the light-absorbing material may be mixed into the resin, thereby forming the external light-blocking layer.

The background layer or the backing may contain the light-absorbing material therein, such that the background layer or the backing acts as an external light-blocking layer without a separate external light-blocking layer. In addition, an adhesive layer may act as an external light-blocking layer. In this case, the light-absorbing material may be formed such that it is mixed into the adhesive. Furthermore, the external light-blocking layer may have other optical functions. Specifically, other layers having an optical function may contain the light-absorbing material therein, such that they can also act as an external light-blocking layer.

The backing 25 serves to support the color shift-reducing layer 20 and the external light-blocking layer 30. The color shift-reducing layer and the external light-blocking layer may be directly applied as a coating on the rear surface and the front surface of the backing. In this case, it is possible to advantageously reduce the number of backings, since one backing can support both the color shift-reducing layer and the external light-blocking layer. In some embodiments, the backing 25 may be omitted.

Table 3 presents test results of examples of the invention, which have an external light-blocking layer, and comparative examples, which do not have an external light-blocking layer.

**Table 3**

| Pattern Type | Filter Configuration | Reflection Haze* (nit) |
|---|---|---|
| Dot Pattern | Color shift-reducing layer (Lens sections facing viewer) | 34.46 |
| | Color shift-reducing layer (Lens sections facing viewer)/External light-blocking layer (PMMA + Black light-absorbing material) | 3.85 |
| Semi-Elliptical Cross-Section Pattern | Color shift-reducing layer (Lens sections facing viewer)/External light-blocking layer (PMMA + Black light-absorbing material) | 1.53 |
| | Color shift-reducing layer (Lens sections facing panel)/External light-blocking layer (PMMA + Black light-absorbing material) | 1.5 |
| | Color shift-reducing layer (1wt% of diffusion beads disposed in lens sections, Lens sections facing panel) | 2.49 |
| | Color shift-reducing layer (1wt% of diffusion beads disposed in lens sections, Lens sections facing panel/External light-blocking layer (PMMA + Black light-absorbing material) | 1.7 |
| | Color shift-reducing layer (0.2wt% of 0.3µm TiO₂ diffusion beads disposed in lens sections, Lens sections facing panel) | 7.77 |
| | Color shift-reducing layer (0.2wt% of 0.3µm TiO₂ diffusion beads disposed in lens sections, Lens sections facing panel)/External light-blocking layer (PMMA + Black light-absorbing material) | 3.05 |
| | Color shift-reducing layer (0.5wt% of 0.3µm TiO₂ diffusion beads disposed in lens sections, Lens sections facing panel) | 11.68 |
| | Color shift-reducing layer (0.5wt% of 0.3µm TiO₂ diffusion beads disposed in lens sections, Lens sections facing | 6.19 |
| | panel)/External light-blocking layer (PMMA + Black light-absorbing material) | |

| | | |
|---|---|---|
| Note) Reflection Haze*: Reflection Haze of External Light | | |

The reflection haze of external light indicates the degree by which external light is reflected and scattered. It is more preferable that the haze be lower. In the method of measuring external light, the results were obtained by attaching a sample to a panel and measuring the luminance of light that was reflected sideways at 50º to the left and right under conditions in which the external light was directed upward at 40º and the intensity of illumination on the surface of the panel was 300lux. As presented in Table 3, it can be appreciated that the external light-blocking layer reduces hazing.

The optical filter for a display device of the present invention may further include a variety of functional films, such as a transparent substrate for protecting a panel, an anti-fog layer, an antireflection layer, a polarizer film and a phase retardation film.

In this case, respective constitutional layers of the optical filter of the present invention may be adhered or bonded using an adhesive or a bonding agent. Specific examples thereof may include, but are not limited to, acrylic adhesives, silicone-based adhesives, urethane-based adhesives, polyvinyl butyral (PMB) adhesives, ethylene vinyl acetate (EVA)-based adhesives, polyvinyl ether (PVE), saturated amorphous polyester and melamine resins.

The foregoing descriptions of specific exemplary embodiments of the present invention have been presented with respect to the certain embodiments and drawings. They are not intended to be exhaustive or to limit the invention to the precise forms disclosed, and obviously many modifications and variations are possible for a person having ordinary skill in the art in light of the above teachings.

It is intended therefore that the scope of the invention not be limited to the foregoing embodiments, but be defined by the Claims appended hereto and their equivalents.

## Claims

1. An optical filter adapted to reduce color shift in a liquid crystal display, the optical filter being adapted to be disposed in front of a liquid crystal display panel of the liquid crystal display in which light emitted from the liquid crystal display panel has different colors depending on a viewing angle and a grayscale level, owing to birefringence characteristics of liquid crystal molecules, comprising:
a color shift-reducing layer (20); and
an external light-blocking layer (30),
wherein the color shift-reducing layer (20) comprises a background layer (21) and a plurality of engraved or raised lens sections (23) formed on the background layer (21) such that the lens sections (23) are spaced apart from each other, the lens sections being adapted to diffuse a portion of the light incident onto each of the lens sections (23), so that the portion of the light is mixed with another portion of the light passing between adjacent ones of the lens sections (23), and
wherein the external light-blocking layer (30) comprises a light-absorbing material.

2. The optical filter of claim 1, wherein the light-absorbing material comprises a black material that absorbs all wavelengths of visible light.

3. The optical filter according to any one of the preceding claims, wherein the color shift-reducing layer (20) is adapted such that color coordinates of a transmitted color of the external light-blocking layer are such that L* is 50 or less and a* and b* range from -30 to +30 under a D65 light source.

4. The optical filter according to any one of the preceding claims, wherein the light-absorbing material comprises carbon black.

5. The optical filter according to any one of the preceding claims,
wherein the light-absorbing material is contained in the background layer (21), and the external light-blocking layer is the background layer (21), or
wherein the external light-blocking layer (30) comprises the light-absorbing material mixed in a resin or an adhesive.

6. The optical filter according to any one of the preceding claims, wherein the external light-blocking layer (30) is provided in front of the color shift-reducing layer (20).

7. The optical filter according to any one of the preceding claims, further comprising a backing (25), wherein
the color shift-reducing layer (20) is a coating that is directly applied on a rear surface of the backing (25), and
the external light-blocking layer (30) is a coating that is directly applied on a front surface of the backing (25).

8. The optical filter according to any one of the preceding claims, wherein a respective cross-section of the lens sections (23) comprises an arc of an ellipse.

9. The optical filter according to any one of the preceding claims, wherein the background layer (21) has adhesiveness in itself.

10. The optical filter according to any one of the preceding claims, wherein the lens sections (23) have a depth-to-width ratio of 0.25 or greater.

11. The optical filter according to any one of the preceding claims, wherein the lens sections (23) have a spacing-to-pitch ratio ranging from 0.5 to 0.95.

12. The optical filter according to any one of the preceding claims, wherein the lens sections (23) have a pitch of 45µm or less.

13. A liquid crystal display comprising an optical filter according to any one of the preceding claims.

14. The liquid crystal display of claim 13, wherein the lens sections (23) of the optical filter for reducing color shift are formed on a rear surface of the background layer (21) that faces the liquid crystal display panel (10).

15. The liquid crystal display of any of claims 13 and 14, wherein the optical filter for reducing color shift is in close contact with the liquid crystal display panel (10).
